(19) Europäisches Patentamt
European Patent Office
Office européen des brevets

(11) **EP 4 654 628 B1**

(12) **EUROPEAN PATENT SPECIFICATION**

(45) Date of publication and mention
of the grant of the patent:
**01.07.2026 Bulletin 2026/27**

(21) Application number: **24290017.3**

(22) Date of filing: **24.05.2024**

(51) International Patent Classification (IPC):
***H04W 4/38*** (2018.01)

(52) Cooperative Patent Classification (CPC):
**H04W 4/38;** H04L 67/12; H04W 84/18

(54) **METHOD FOR BUILDING A KNOWLEDGE OF AN ENVIRONMENT CONTENT**

VERFAHREN ZUM AUFBAU EINES WISSENS EINES UMGEBUNGSINHALTS

PROCÉDÉ DE CONSTRUCTION D'UNE CONNAISSANCE D'UN CONTENU D'ENVIRONNEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**26.11.2025 Bulletin 2025/48**

(73) Proprietors:
• **Mitsubishi Electric R&D Centre Europe B.V.
1119 NS Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventors:
• **Bechihi, Adel
35708 RENNES CÉDEX 7 (FR)**
• **Bouttier, Arnaud
35708 RENNES CÉDEX 7 (FR)**

(74) Representative: **Plasseraud IP
104 Rue de Richelieu
CS92104
75080 Paris Cedex 02 (FR)**

(56) References cited:
**CN-B- 109 029 422     US-A1- 2020 245 115
US-A1- 2021 368 308**

**Description**

The invention relates to a method for building a knowledge of an environment content.

**-- BACKGROUND OF THE INVENTION --**

Acquiring knowledge about an environment is crucial for many applications including robotics such as path planning, trajectory optimization and obstacle avoidance, surveillance and monitoring such as mobile object tracking, etc. Knowledge of the environment content is acquired through repeated sensing operations that detect obstacles existing in the environment. For example, light-based detection and ranging measurements, commonly known as LiDAR measurements, are very efficient for providing information about obstacle positions in a rapid and easy-to-implement manner. Principle of LiDAR measurement is well known at present time and numerous publications are available about it.

Using multiple sensors which are separated in space for performing the measurements and then gathering the measurement results from all sensors provides an improved knowledge about the environment content thanks to multiplying the lines-of-sight toward at least some of the elements of the environment content. This requires having the multiple sensors which perform the measurements located apart from one another, at fixed respective locations or onboard mobile carriers. For example, mobile carriers which are very convenient are unmanned aerial vehicles, also known as UAVs or flying drones. In particular, UAVs are convenient for operating in disaster-stricken regions or dangerous areas.

Using multiple sensors has further advantages including the following ones:

- improved accuracy and reliability of the measurement results thanks to measurement redundancy and possible cross-checking;

- sensor redundancy enhances reliability of the whole system since failure of one of the sensors can be compensated for by the other sensors;

- increased geographical coverage and range thanks to the multiple sensors being distributed in space;

- multiple-sensor system can adapt to time-varying environments more easily, in particular when some of the sensors are onboard mobile carriers;

- robustness against noise affecting the measurement results can be provided by multiple-sensor implementation, for example by filtering out noise or interference which differ from one sensor to another;

- optimization of resources such as power, bandwidth, computation, etc. is possible by intelligently assigning respective tasks to be performed by the sensors;

- improved decision-making operation can result from the preceding advantages, in particular for autonomous systems; and

- multiple-sensor systems may be less expensive than a single high-reliability and large-coverage unit.

Multiple-sensor systems can operate either in a centralized way of in a distributed way for collecting the measurement results and using them for building the knowledge of the environment content. In a centralized operation, all sensors transmit their respective measurement results to a common data-processing unit which builds a digital representation of the environment content from all the measurement results and stores it. But such centralized operation is very sensitive to failures possibly affecting the common data-processing unit, and each sensor must remain in the transmission range from this common data-processing unit. In addition, data processing and storage capacity of the common data-processing unit may be difficult to increase if further sensors are to be added. Implementing a distributed operation avoids or alleviates these drawbacks. But distributed configuration raises issues about how to efficiently share between all separated units of the system measurement results that have been obtained by the sensors. In particular, the following issues are to be addressed:

- how to use the communication resources for transmitting efficiently information between the multiple units;
- how to ensure that the information about the environment that is available at each unit is consistent with the information at other ones of the units;
- how to avoid diverging latencies in updating the information that is available at each unit of the distributed system;

EP 4 654 628 B1

- how to ensure the scalability of the distributed system; and
- how to uphold security of the already-acquired information about the environment content. Prior art is disclosed in document US 2020/245115 A1.

Starting from this situation, one object of the present invention consists in improving the existing methods for acquiring knowledge of an environment content using a distributed system of multiple cooperating devices.

In particular, the invention aims at providing better balance between performance in building the knowledge of the environment content and consumption of storage and communication resources.

## -- SUMMARY OF THE INVENTION --

The present invention relates to a method according to claim 1 and to a node according to claim 14. For meeting these objects or others, a first aspect of the present invention proposes a method for building a knowledge of an environment content using a plurality of nodes, at least one of the nodes comprising electronic storage and computational means, wireless communication means and a controller module. When the method is implemented, the storage means of one of the nodes operating as data-collecting node contain stored data that form a digital representation of the environment content, referred to as internal data. These internal data may originate from measurements on the environment content which have been performed at this node and/or from the other nodes through reception by the wireless communication means.

The method comprises the following step sequence which is executed at least once by the data-collecting node operating under control by its controller module:

/i/ receiving through the wireless communication means of the data-collecting node from at least another one of the nodes, external data relating to the environment content;

/ii/ selecting part of the internal data stored in the data-collecting node, and

/iii/ within the data-collecting node, storing a merging of the selected part of the internal data with the external data received in step /i/.

According to the present invention, the computational means of the data-collecting node are configured to select the part of the internal data in step /ii/ so as to minimize a discrepancy between a first synthetized digital representation which results from a merging of the internal data without selection with the external data received in step /i/, and a second synthetized digital representation which results from another merging of the selected part of the internal data with the external data received in step /i/. A trade-off is thus produced between reducing a data amount to be stored in step /iii/ and maintaining an accuracy level for the digital representation that corresponds to these stored data.

In a distributed configuration of the node set, harmonization between the digital representations that are stored separately in all the nodes is obtained by all the nodes operating as data-collecting nodes, preferably each node executing the step sequence /i/ to /iii/ repeatedly. In this way, all digital representations as stored in the nodes gradually converge toward a common representation of the environment content, while allowing taking into account new information captured by at least one of the nodes. Such new information may be due to one of the nodes implementing new lines-of-sight toward some of the environmental elements, or due to the environment content itself varying with time.

The invention improves the ability of each digital representation to account for the environment content with maximum meaningful information while requiring reduced storage capacity in each node acting as data-collecting node. Indeed, the selection of the internal data is performed so that it minimizes information loss with respect to the initial digital representation stored in this node but taking into account the information just received from the other nodes. For example, an aspect of the environment content that is contained in the external data received in step /i/ may be excluded from the selected part of the internal data without causing significant information loss in the final digital representation stored in step /iii/.

The step sequence may further comprise the additional following step, in particular for distributed configurations: /iv/ sending by the data-collecting node to at least another one of the nodes, using the wireless communication means, the part of the internal data selected in step /ii/ by this data-collected node.

In this way, information about the environment content that was contained in the external data received by the data-collecting node is not sent by this latter to the other nodes, thereby avoided repeated transmission of same information between the nodes. In addition, the invention ensures that an aspect of the environment content that was available only at the data-collecting node is communicated in priority to the other nodes, thereby accelerating harmonization between the respective digital representations stored in all the nodes. Put another way, the invention method optimizes data exchange between the nodes by prioritizing sharing of data that are most relevant for enriching the digital representations which are stored in the data-receiving nodes. This also participates in securing newly-acquired knowledge of some aspects of the environment content, by multiple recordings thereof carried out with minimum delay.

The following optional improvement of the invention deals with optimized use of the communication resources that are available in the multiple-node system for sharing maximum relevant information between the nodes at each execution of the step sequence. According to this improvement, the part of the internal data may be selected in step /ii/ by the computational means of the data-collecting node based on wireless communication resources that are available for the nodes.

Preferably, the step sequence /i/ to /iii/ or /i/ to /iv/ may be executed repeatedly by the data-collecting node.

When the plurality of nodes has a centralized configuration in which each node other than the data-collecting node is a sensing node which comprises at least sensing means and wireless communication means, the external data received by the data-collecting node in step /i/ may originate from at least one measurement performed by the sensing means of at least one of the sensing nodes. In such centralized configuration, the data-collecting node may comprise a server.

Alternatively, when the plurality of nodes has a distributed configuration, several of the nodes are sensing nodes and comprise respective sensing means, respective electronic storage and computational means, respective wireless communication means and a respective controller module. Then, each node may be configured for operating as a respective data-collecting node by executing the step sequence at least once under control by the controller module of this node. In such case, the external data received by each node in step /i/ may originate from at least one measurement performed by the sensing means of at least another one of the nodes. Additionally, the external data received by each node in step /i/ may comprise part of the internal data of at least another one of the nodes as selected by this latter executing step /ii/.

Advantageously when step /iv/ is implemented, the computational means of each node may be configured to select the part of the internal data in step /ii/ so as to additionally meet a size value for this selected part of the internal data, the respective size values for all the selected parts of the internal data transmitted by the nodes being determined for:

- minimizing a global cost function combining respective cost functions of the nodes, the cost function for each node being an increasing function of the discrepancy between the first and second synthetized digital representations for this node, and

- simultaneously ensuring that a sum of respective communication resources values that are used to transmit the selected part of the internal data associated to the given size values, calculated over all the nodes, is less than a maximum communication resources capacity shared by the plurality of nodes.

Thus, the invention method allocates more communication resources to transmission of data that are most relevant for enriching the digital representations which are stored in the nodes.

For each node, the communication resources value may advantageously be determined as a function of the size value of the selected part of the internal data to be sent by this node to the other nodes and a communication link quality parameter such as a channel response or a signal-to-noise ratio value effective for the wireless communication means of the node.

According to an optional improvement when the sequence step /i/ to /iv/ is executed repeatedly, the controller module of each node may activate the following actions during at least some of the repeated executions of the step sequence:

- the computational means calculate several values of the cost function for this node, said cost function values being assessed for several possible size values of the selected part of the internal data;

- the node sends to the other nodes, using the wireless communication means, an own resources request which contains the values of the cost function and associated values of the communication resources, and the node collects respective resources requests from the other nodes; and

- the computational means of the node determines one size value to be used for the selected part of the internal data of the node, as a trade-off between the cost function values and associated communication resources values of all the nodes.

Generally for the invention, each of the following additional features may be implemented optionally:

- the sensing means of at least one of the nodes may comprise a LiDAR unit;

- the computational means of each node which operates as data-collecting node may be configured to implement Gaussian mixture model for producing the internal data that are stored I step /iii/ in the storage means of this node; and

- at least one of the nodes may comprise a carrier, preferably a mobile carrier, in particular a carrier of unmanned aerial vehicle type, with components of the node onboard the carrier.

A second aspect of the invention proposes a node that comprises electronic storage and computational means, wireless communication means suitable for transmitting and receiving data, and a controller module, wherein the controller module is configured for controlling execution of a method according to the first invention aspect when the node is used in cooperation with at least one another node configured for sending the external data.

The node may further comprise sensing means that are suitable for performing measurements on the environment content.

In preferred embodiments, the node may further comprise a carrier, preferably a mobile carrier, in particular a carrier of unmanned aerial vehicle type, with components of the node onboard the carrier.

These and other features of the invention will be now described with reference to the appended figures, which relate to preferred but not-limiting embodiments of the invention.

## -- BRIEF DESCRIPTION OF THE DRAWINGS --

Figure 1 shows a system comprised of multiple devices which is suitable for implementing the invention;

Figure 2 is a block-diagram which shows components internal to one of the devices of the system of Figure 1;

Figures 3a, 3b and 3c illustrate selection of part of internal data which are stored in one of the devices, performed according to the present invention;

Figure 4 is a diagram mapping a cost function as determined by one of the devices and communication resources; and

Figure 5 illustrates a trade-off that is implemented between all devices of the system of Figure 1 for allocating size values to the parts of the internal data to be selected within all the devices.

Same reference numbers which are indicated in different ones of these figures denote identical elements or elements with identical function.

## -- DETAILED DESCRIPTION OF THE INVENTION --

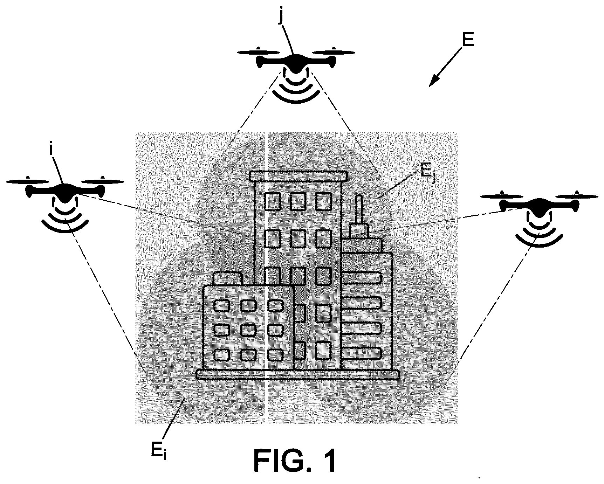

Referring to Figure 1, a set of several cooperating devices is used for collecting information about an environment content as existing in a geographical zone, and denoted as a whole with E-letter. As an example, the environment may be of urban type and its content comprised of buildings whose respective locations and shapes are to be collected through sensing measurements. For illustrating purpose, the devices together form a system with distributed configuration, and each device constitutes a node as recited in the general part of the present description.

Each device may be an unmanned aerial vehicle (UAV) which can collect information about only part of the environment content E using its own sensing means, for example due to the device position relative to the environment, shadowing effects caused by some of the environment content elements to others, limited sensing range for each device, etc. $E_i$, respectively $E_j$, denotes symbolically the environment content part that is accessible to device i, resp. j, for sensing measurements. All devices i, j,... of the set of cooperating devices may be assumed to be identical for simplifying but this is not compulsory.

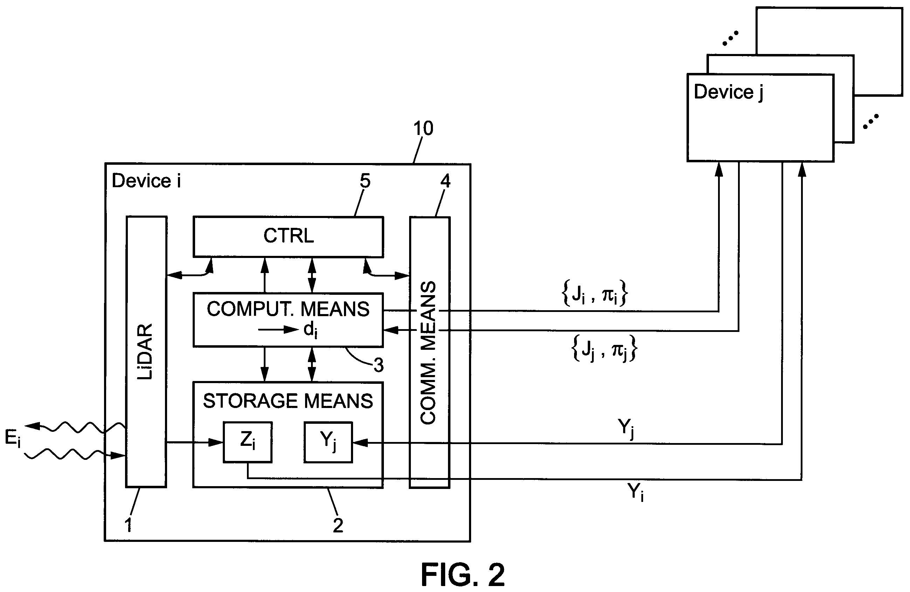

A shown in Figure 2, components internal to device i may comprise:

- a carrier 10, of UAV-type in the present example, for carrying onboard the other device components;

- sensing means 1, for example comprised of a LiDAR unit, suitable for performing measurements on the environment content E. In case of LiDAR measurements, each measurement result indicates an obstacle distance from the current position of device i in association with an identified sensing direction. Figure 2 symbolically shows LiDAR radiation emitted toward the environment content part $E_i$ and sensed backscattered radiation;

- electronic storage means 2, suitable for storing data related to the environment content, including data originating from measurement results delivered by the sensing means 1 of device i;

- electronic computational means 3, denoted COMPUT. MEANS and suitable for processing the data contained in the storage means 2 and for calculating values from these data as described below;

- wireless communication means 4, denoted COMM. MEANS and suitable for communicating with the other devices generally referred to as devices j; and

- a controller module 5, denoted CTRL and configured for controlling coordinated operations of the preceding components of device i.

Part of the data about the environment content which are stored in the storage means 2 of device i originates from the other devices j through the wireless communication means 4, in addition to the data provided by the sensing means 1 of device i. Generally, all stored data may be in a format suitable for the computational means 3 to implement data clustering. For example, one of the following clustering algorithms may be implemented, depending on the application: grid-based clustering, hierarchical clustering, centroid-based clustering such as k-means algorithm, density-based clustering such as DBSCAN algorithm, distribution-based clustering such as Gaussian mixture model clustering, etc. All these clustering algorithms are widely documented, so they are not described again here. The Gaussian mixture model clustering may be preferred because of its ability to accommodate any cluster shape and size. It is used in the sequel as an example. Using such data format, each data stored in the storage means 2 of device i is comprised of a location value $z_{i,n}$, a weight value $w_{i,n}$, and a covariance 3 x 3 matrix $\Sigma_{i,n}$ which together define a n-th cluster $f_{i,n}$ according to the equation:

$$f_{i,n}(x) = w_{i,n} \cdot e^{-\frac{1}{2}(x-z_{i,n})^T \Sigma_{i,n}^{-1}(x-z_{i,n})}$$

where x denotes a generic position in the environment E and n is an integer index for numbering the clusters. $z_{i,n}$ thus corresponds to the location of an environment content element that is described by the n-th cluster. Then, the following function $f_i$ is a probability density distribution which forms a digital representation of the environment content E as stored in the storage means 2 of device i:

$$f_i(x) = \sum_n f_{i,n}(x)$$

The cluster weights $w_{i,j}$ are determined such that $\iiint f_i(x)dx = 1$. The data $\{z_{i,n}, w_{i,n}, \Sigma_{i,n}\}$ for all n-values currently implemented by the computational means 3 of device i constitute a digital representation of the environment content E as stored in device i. This digital representation may be of digital-twin type and is updated continually during an operation of the multi-device system through data exchange between device i and the other devices j. This data exchange is performed by each device repeatedly executing the step sequence that is described now for device i.

The digital representation as stored in device i when starting a new execution of the step sequence corresponds to the internal data introduced in the general part of the present description, thereafter denoted with label $Z_i$. These internal data $Z_i$ result from measurements performed by the sensing means 1 of device i and also from data previously received by device i from the other devices j. At this time of the step sequence, device i receives further data from at least one of the other devices j, these further data being denoted with label $Y_j$ and corresponding to the external data mentioned in the general part of the present description. The following first synthetized digital representation may be formed within device i by gathering the internal data $Z_i$ and the external data $Y_j$, j being different from i:

$$p(E|Y_1, \ldots, Z_i, \ldots, Y_N)$$

where E here denotes an assessed possible content of the environment and N is the device number. p may be interpreted as the probability for environment content E given the first synthetized digital representation, $Y_1$ being the external data received from device 1 (j=1) other than device i,..., $Y_N$ being the external data received from device N (j=N) other than device i. Then, for each of several tested selections applied to the internal data $Z_i$, the computational means 3 forms the following second synthetized digital representation:

$$p(E|Y_1, \dots, y_i, \dots, Y_N)$$

where $y_i$ denotes the selected part of the internal data $Z_i$, with the constraint that the size value of this selected part $y_i$ is fixed at this stage and equal to $d_i$. $d_i$ is less than the size of the internal data $Z_i$. Then, the computational means 3 vary the tested selection applied to the internal data $Z_i$ for minimizing a discrepancy between both first and second synthetized digital representations. If d denotes a metric that quantifies the discrepancy between two digital representations, the computational means 3 select the $d_i$-sized selected part $y_i$ which minimizes $d(p(E|Y_1, \dots, y_i, \dots, Y_N), p(E|Y_1, \dots, Z_i, \dots, Y_N))$, with $d(.,.)$ being a function measuring the discrepancy between two probability distributions. Several metrics known in the art can be used alternatively to one another, including the Wasserstein metric, the Hellinger distance, the Kullback-Leibler divergence, the Bhattacharyya distance and the integral squared distance. The part $y_i$ of the internal data $Z_i$ which is thus selected is denoted $Y_i^{d_i}$ and the following cost function value is calculated:

$$J_i(d_i) = d\left(p\left(E|Y_1, \dots, Y_i^{d_i}, \dots, Y_N\right), p(E|Y_1, \dots, Z_i, \dots, Y_N)\right)$$

This cost function has thus been minimized for fixed $d_i$-value by adjusting the data part $Y_i^{d_i}$ selected from the internal data $Y_i$.

Same process and calculations are repeated for several values for the size $d_i$. Then, for each of these size values $d_i$, a communication resources value is determined by the computational means 3 which quantifies the amount of communication resources that is necessary for transmitting a $d_i$-sized data part. To this purpose, a signal-to-noise ratio value related to wireless communication of device i, denoted $SNR_i$, may be recovered from previous communication sessions. Then, the communication resources amount value denoted $\pi_i$ can be determined, for example by using stored look-up tables available to the computational means 3: $\pi_i(d_i, SNR_i)$. This assessment of the necessary communication resources may concern one of several modulation and coding schemes which can be used alternatively, such as the binary phase-shift keying or BPSK, the quadrature phase-shift keying or QPSK, the 8-PSK and 16-QAM, depending on the signal-to-noise ratio value $SNR_i$. Channel responses of the communication links between device i and the other devices j may also be used for determining the communication resources $\pi_i$, instead of or in combination with the signal-to-noise ratio value $SNR_i$. Several associated $J_i(d_i)$- and $\pi_i$-values are then sent by device i to the other devices j through the wireless communication means 4, and similar value pairs $J_j(d_j)$-$\pi_j$ are received by device i from each other device j.

Then, the computational means 3 of each device i, j... select respective values for the sizes $d_i$ to be allocated to device i, $d_j$ to be allocated to device j,..., which meet both following conditions:

the result of a combination of the cost-function values $J_i(d_i)$ and $J_j(d_j)$ calculated over all the devices i, j... of the system is minimum, and

the result of an addition of the communication resources amount values $\pi_i$ and $\pi_j$ calculated over all the devices i, j... is less than a maximum resource capacity of the wireless communication means of the whole multiple-device system.

A global cost function $J(d_1, \dots, d_N)$ that combines the respective cost functions $J_i(d_i)$ for all nodes i, $i \in \{1, \dots, N\}$, is the objective function of an optimization problem which belongs to a group containing at least:

- Minimizing the sum of respective cost functions: $\min_{d_1, \dots, d_N} J(d_1, \dots, d_N)$ with using

$$J(d_1, \dots, d_N) = \sum_{i=1}^{N} J_i(d_i);$$

- Minimizing the average of respective cost functions: $\min_{d_1, \dots, d_N} J(d_1, \dots, d_N)$ with using

$$J(d_1, \dots, d_N) = \frac{1}{N}\sum_{i=1}^{N} J_i(d_i);$$

- Minimizing a weighted sum of respective cost functions: $\min_{d_1, \dots, d_N} J(d_1, \dots, d_N)$, with using

$$J(d_1, \dots, d_N) = \sum_{i=1}^{N} w_i \cdot J_i(d_i),$$ where $w_i$ are positive scalars representing weights associated to the contribution of each node to the global cost function; and

- Minimizing the maximum individual cost function among the respective cost functions associated to each node:

$$\underset{d_1, \dots, d_N}{\min} J(d_1, \dots, d_N) \text{ with using } J(d_1, \dots, d_N) = \underset{i \in \{1, \dots, N\}}{\max} J_i(d_i) \, .$$

The part $Y_i$ of the internal data $Z_i$ which has the size value $d_i$ determined in this way and which minimizes the cost-function $J_i(d_i)$ is selected by device i. It is merged, for example through cluster-merging as mentioned above, with the external data $Y_j$ received from the devices j other than device i, and the merging result is stored within device i. The data part $Y_i$ may also be sent by device i to the other devices j. Figure 2 indicates the transmissions just-described of the $J_i$- and $\pi_i$-values by device i and $J_j$- and $\pi_j$-values by device j, and the reception of the external data $Y_j$ by device i from device j and thereafter the sharing of the data part $Y_i$ selected from the internal data $Z_i$ by device i with all other devices j.

Same step sequence is executed separately in each of the other devices for this device to determine the selected part of its own internal data to be maintained and shared, i.e. selected part $Y_j$ for device j.

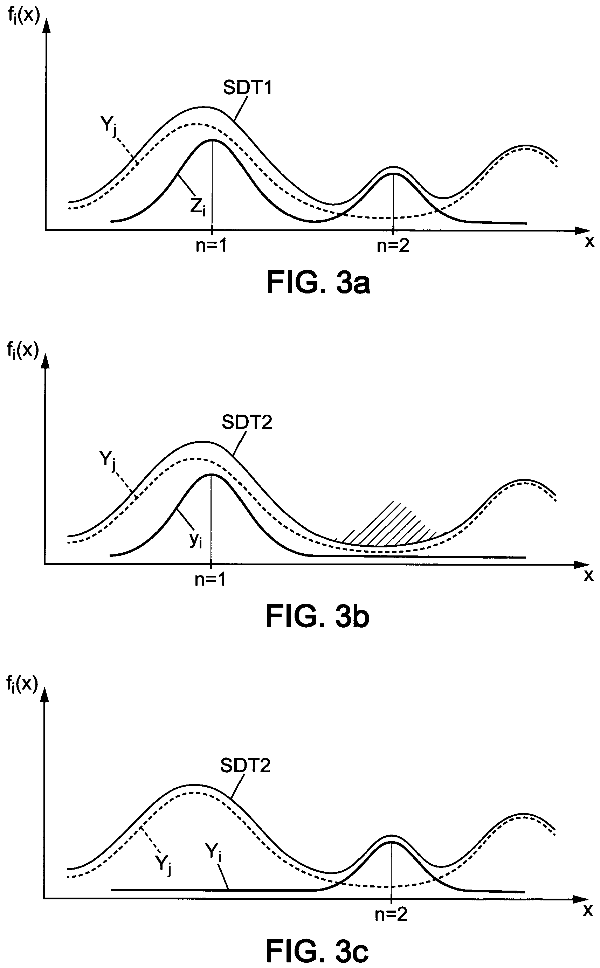

Efficiency of this operation in selecting information on the environment content E to be stored and shared between all the devices is illustrated in Figures 3a-3c, 4 and 5.

Diagram of Figure 3a shows the digital representation that corresponds to the internal data $Z_i$ initially stored in device i, and also the digital representation that corresponds to the external data $Y_j$ received by device i from device j, as functions of the position x. The vertical axis of the diagram indicates values of $f_i(x)$ as introduced earlier. As a simplifying example, the digital representation corresponding to the internal data $Z_i$ comprises two Gaussian components indicated by n=1 and n=2. The Gaussian component n=1 is approximately superposed with one of the components of the digital representation corresponding to the external data $Y_j$ whereas component n=2 is not. The first synthetized digital representation is denoted SDT1.

Diagram of Figure 3b corresponds to that of Figure 3a but with replacing the digital representation corresponding to the internal data $Z_i$ with a limited part thereof that corresponds to the only Gaussian component n=1, i.e. the Gaussian component n=2 is not maintained. Then, merging of such partial digital representation corresponding to selected internal data $y_i$ with the digital representation corresponding to the external data $Y_j$ leads to the represented second synthetized digital representation SDT2. High discrepancy exists between both synthetized digital representations SDT1 of Figure 3a and SDT2 of Figure 3b as shown by the hashed region, due to the difference in shape between SDT1 and SDT2 in the area of the missing Gaussian component n=2.

Diagram of Figure 3c corresponds to that of Figure 3b with maintaining now the only Gaussian component n=2 for forming the partial representation corresponding to the selected internal data $Y_i$, and removing the Gaussian component n=1. The resulting second synthetized digital representation SDT2 shown in Figure 3c is almost similar to the first synthetized digital representation SDT1 of Figure 3a in the area of the suppressed Gaussian component n=1 because similar component is already present in the digital representation that corresponds to the external data $Y_j$, and both synthetized digital representations SDT1 and SDT2 are also similar to each other in the area of the Gaussian component n=2 because this latter component has been maintained in the partial digital representation that corresponds to the selected internal data $Y_i$.

Choosing that of the partial digital representations of Figure 3b, i.e. $y_i$, and Figure 3c, i.e. $Y_i$, which minimizes the discrepancy between the synthetized digital representations SDT1 and SDT2 leads to the selection of Figure 3c, corresponding to the selected data $Y_i$ which provide the Gaussian component n=2 but not that of n=1. This illustrates that the invention method for selecting internal data part $Y_i$ leads to prioritarily storing and sharing with the other devices j the data that are absent from the respective digital representations of these latter devices.

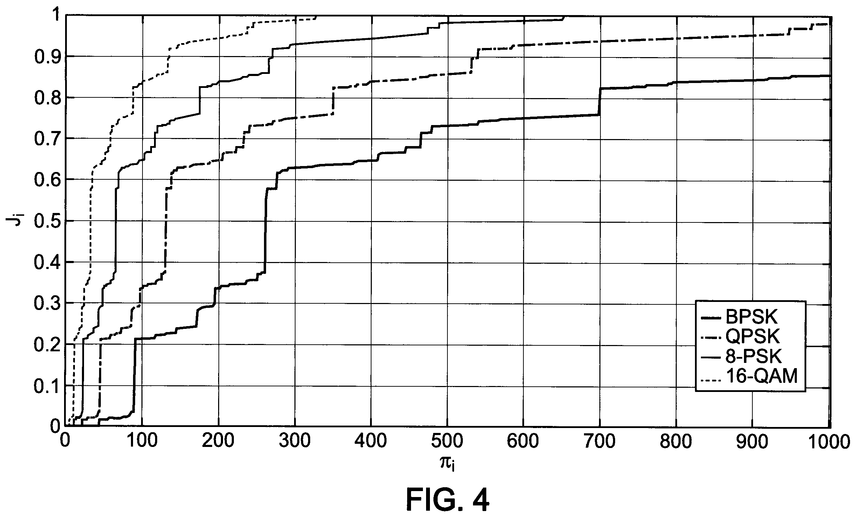

Figure 4 is a diagram which correlates variations of the cost function $J_i$ with those of the corresponding required communication resources $\pi_i$, for each of the modulation and coding schemes BPSK, QPSK, 8-PSK and 16-QAM. It shows that the information quantity that is brought to the other devices increases with large jumps made possible by allocating additional communication resources to device i. It is then preferable to select a value for the communication resources $\pi_i$ that is just above such jump for the device i.

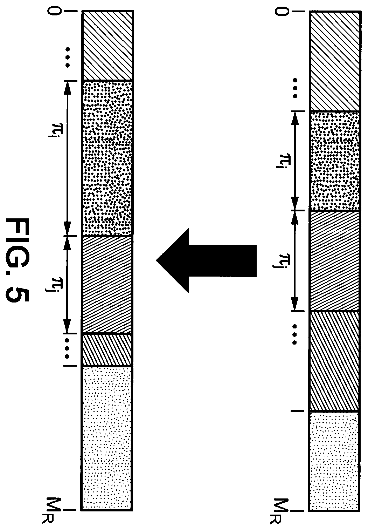

Figure 5 symbolically shows the optimization in the communication resources allocation that has been described earlier. The top part of Figure 5 illustrates communication resources that are initially distributed evenly between the devices, with value $\pi_i$ for device i, value $\pi_j$ for device j..., which are all equal and their sum equalling the maximum communication resources capacity denoted $M_R$. The bottom part of Figure 5 shows the same maximum communication resources capacity $M_R$ distributed in a different way between the devices. As an example, the communication resources amount $\pi_i$ allocated to device i has been increased, corresponding to selecting a communication resources value which is just above one of the jumps appearing in the diagram of Figure 4.

The invention has been described above for a system of several devices with distributed configuration, in which each device implements data selection when acting as a data-collecting node. Implementation of the invention with such distributed system is advantageously supplemented with sending the selected data from the data-collecting device to the other devices. All devices of the distributed system may be identical.

But the invention can also be implemented with a centralized system comprised of one or several data-producing device(s) and one data-collecting unit. Each data-producing device is then equipped with respective sensing means and wireless communication means for performing measurements on the environment content E and wirelessly sending the measurement results to the data-collecting unit. The measurements results constitute the external data $Y_j$ for the data-collecting unit i after this latter has received them. Then the invention provides optimized selection to be implemented with the internal data $Z_i$ already stored at the data-collecting unit i so that supplementation with the newly received external data $Y_j$ does not produce much redundancy. A merging of the selected part of the internal data $Z_i$, corresponding to above label $Y_i$, with the external data $Y_j$ is then stored at the data-collecting unit i without uselessly occupying storage resources with respect to the overall information content.

## Claims

1.  A method for building a knowledge of an environment content using a plurality of nodes (i, j), wherein at least one of the nodes comprises electronic storage and computational means (2, 3), wireless communication means (4) and a controller module (5),

    wherein the storage means (2) of one of the nodes (i, j) operating as data-collecting node contain stored data that form a digital representation of the environment content, referred to as internal data, and the method comprises the following step sequence executed at least once by the data-collecting node operating under control by the controller module (5) of said data-collecting node:

    /i/ receiving through the wireless communication means (4) of said data-collecting node from at least another one of the nodes, external data relating to the environment content;
    /ii/ selecting part of the internal data stored in the data-collecting node, and
    /iii/ within the data-collecting node, storing a merging of the selected part of the internal data with the external data received in step /i/,

    wherein the computational means (3) of the data-collecting node are configured to select the part of the internal data in step /ii/ so as to minimize a discrepancy between a first synthetized digital representation which results from a merging of the internal data without selection with the external data received in step /i/, and a second synthetized digital representation which results from another merging of the selected part of said internal data with said external data received in step /i/,
    thus producing a trade-off between reducing a data amount to be stored in step /iii/ and maintaining an accuracy level for the digital representation that corresponds to the data merging stored in said step /iii/.

2.  The method of claim 1, wherein the step sequence further comprises the additional following step:
    /iv/ sending by the data-collecting node to at least another one of the nodes (i, j), using the wireless communication means (4), the part of the internal data selected in step /ii/ by said data-collected node.

3.  The method of claim 2, wherein the part of the internal data is selected in step /ii/ by the computational means (3) of the data-collecting node based on wireless communication resources that are available for the nodes (i, j).

4.  The method of one of the claims 1 to 3, wherein the step sequence is executed repeatedly by the data-collecting node.

5.  The method of one of claims 1 to 4, wherein the plurality of nodes (i, j) has a centralized configuration in which each node other than the data-collecting node is a sensing node which comprises at least sensing means (1) and wireless communication means (4), and wherein
    the external data received by the data-collecting node in step /i/ originate from at least one measurement performed by the sensing means (1) of at least one of the sensing nodes.

6.  The method of claim 5, wherein the data-collecting node comprises a server.

7.  The method of one of claims 1 to 4, wherein the plurality of nodes (i, j) has a distributed configuration in which several of the nodes are sensing nodes and comprise respective sensing means (1), respective electronic storage and computational means (2, 3), respective wireless communication means (4) and a respective controller module (5), and

each node (i, j) is configured for operating as a respective data-collecting node by executing the step sequence at least once under control by the controller module (5) of said node, and

the external data received by each node in step /i/ originate from at least one measurement performed by the sensing means (1) of at least another one of the nodes.

8. The method of claims 2 and 7, wherein the computational means (3) of each node (i, j) are configured to select the part of the internal data so as to additionally meet a size value for said selected part of the internal data, the respective size values for all the selected parts of the internal data transmitted by the nodes being determined for:

- minimizing a global cost function combining respective cost functions of the nodes (i, j), the cost function for each node being an increasing function of the discrepancy between the first and second synthetized digital representations for said node, and
- simultaneously ensuring that a sum of respective communication resources values that are used to transmit the selected part of the internal data associated to the given size values, calculated over all the nodes (i, j), is less than a maximum communication resources capacity shared by the plurality of nodes.

9. The method of claim 8, wherein for each node (i, j), the communication resources value is determined as a function of the size value of the selected part of the internal data to be sent by said node to the other nodes and a communication link quality parameter such as a channel response or a signal-to-noise ratio value effective for the wireless communication means (4) of said node.

10. The method of claims 4 and 9, wherein the controller module (5) of each node (i, j) activates the following actions during at least some of the repeated executions of the step sequence:

- the computational means (3) calculate several values of the cost function for said node (i, j), said cost function values being assessed for several possible size values of the selected part of the internal data;
- the node (i, j) sends to the other nodes, using the wireless communication means (4), an own resources request which contains the values of the cost function and associated values of the communication resources, and said node collects respective resources requests from the other nodes; and
- the computational means (3) of the node (i, j) determines one size value to be used for the selected part of the internal data of said node, as a trade-off between the cost function values and associated communication resources values of all the nodes.

11. The method of one of claims 5 to 10, wherein the sensing means (1) of at least one of the nodes (i, j) comprises a LiDAR unit.

12. The method of one of the preceding claims, wherein the computational means (3) of each node (i, j) that operates as data-collecting node are configured to implement Gaussian mixture model for producing the internal data that are stored in step /iii/ in the storage means (2) of said node.

13. The method of one of the preceding claims, wherein at least one of the nodes (i, j) comprises a carrier (10), preferably a mobile carrier, in particular a carrier of unmanned aerial vehicle type, with components of the node onboard the carrier.

14. A node (i, j) comprising electronic storage and computational means (2, 3), wireless communication means (4) suitable for transmitting and receiving data, and a controller module (5), wherein the controller module is configured for controlling execution of a method according to one of the preceding claims when the node is used in cooperation with at least one another node configured for sending the external data.

15. The node (i, j) of claim 15, further comprising sensing means (1) suitable for performing measurements on an environment content.

**Patentansprüche**

1. Verfahren zum Bilden eines Wissens über einen Umweltinhalt unter Verwendung einer Mehrzahl von Knoten (i, j), wobei wenigstens einer der Knoten elektronische Speicher- und Rechenmittel (2, 3), drahtlose Kommunikationsmittel (4) und ein Steuermodul (5) umfasst,

wobei die Speichermittel (2) eines der Knoten (i, j), welcher als Datensammelknoten betrieben wird, gespeicherte Daten enthalten, welche eine digitale Repräsentation des Umweltinhalts bilden, bezeichnet als interne Daten, und das Verfahren die folgende Schrittfolge umfasst, welche wenigstens einmal von dem Datensammelknoten ausgeführt wird, welcher unter Steuerung durch das Steuermodul (5) dieses Datensammelknotens betrieben wird:

/i/ Empfangen, über die drahtlosen Kommunikationsmittel (4) des Datensammelknotens, von wenigstens einem anderen der Knoten, externer Daten, welche sich auf den Umweltinhalt beziehen;
/ii/ Auswählen eines Teils der internen Daten, welche in dem Datensammelknoten gespeichert sind; und
/iii/ innerhalb des Datensammelknotens, Speichern einer Zusammenführung des ausgewählten Teils der internen Daten mit den externen Daten, welche in Schritt /i/ empfangen werden,

wobei die Rechenmittel (3) des Datensammelknotens dazu eingerichtet sind, den Teil der internen Daten in Schritt /ii/ derart auszuwählen, dass eine Abweichung zwischen einer ersten synthetisierten digitalen Repräsentation, welche aus einer Zusammenführung der internen Daten ohne Auswahl mit den externen Daten, welche in Schritt /i/ empfangen werden, resultiert, und einer zweiten synthetisierten digitalen Repräsentation minimiert wird, welche aus einer anderen Zusammenführung des ausgewählten Teils der internen Daten mit den externen Daten, welche in Schritt /i/ empfangen werden, resultiert,

wobei ein Kompromiss zwischen einer Verringerung einer Datenmenge erzeugt wird, welche in Schritt /iii/ gespeichert werden sollen, und ein Genauigkeitsniveau für die digitale Repräsentation aufrechterhalten wird, welches der Datenzusammenführung, welche in Schritt /iii/ gespeichert wird, entspricht.

2. Verfahren nach Anspruch 1, wobei die Schrittfolge ferner den zusätzlichen folgenden Schritt umfasst:
/iv/ Senden durch den Datensammelknoten an wenigstens einen anderen der Knoten (i, j), unter Verwendung der drahtlosen Kommunikationsmittel (4), des Teils der internen Daten, welche in Schritt /ii/ durch den Datensammelknoten ausgewählt werden.

3. Verfahren nach Anspruch 2, wobei der Teil der internen Daten in Schritt /ii/ durch die Rechenmittel (3) des Datensammelknotens auf der Grundlage von drahtlosen Kommunikationsressourcen ausgewählt wird, welche für die Knoten (i, j) verfügbar sind.

4. Verfahren nach einem der Ansprüche 1 bis 3, wobei die Schrittfolge wiederholt durch den Datensammelknoten ausgeführt wird.

5. Verfahren nach einem der Ansprüche 1 bis 4, wobei die Mehrzahl von Knoten (i, j) eine zentralisierte Konfiguration aufweist, in welcher jeder Knoten außer dem Datensammelknoten ein Sensorknoten ist, welcher wenigstens Sensormittel (1) und drahtlose Kommunikationsmittel (4) umfasst, und wobei die externen Daten, welche von dem Datensammelknoten in Schritt /i/ empfangen werden, aus wenigstens einer Messung stammen, welche von den Sensormitteln (1) wenigstens eines der Sensorknoten durchgeführt wird.

6. Verfahren nach Anspruch 5, wobei der Datensammelknoten einen Server umfasst.

7. Verfahren nach einem der Ansprüche 1 bis 4, wobei die Mehrzahl von Knoten (i, j) eine verteilte Konfiguration aufweist, in welcher mehrere der Knoten Sensorknoten sind und jeweilige Sensormittel (1), jeweilige elektronische Speicher- und Rechenmittel (2, 3), jeweilige drahtlose Kommunikationsmittel (4) und ein jeweiliges Steuermodul (5) umfassen, und

jeder Knoten (i, j) eingerichtet ist, zum Betreiben als ein jeweiliger Datensammelknoten, durch Ausführen der Schrittfolge wenigstens einmal unter Steuerung durch das Steuermodul (5) des Knotens, und
die externen Daten, welche von jedem Knoten in Schritt /i/ empfangen werden, aus wenigstens einer Messung stammen, welche von den Sensormitteln (1) wenigstens eines anderen der Knoten durchgeführt wird.

8. Verfahren nach den Ansprüchen 2 und 7, wobei die Rechenmittel (3) jedes Knotens (i, j) dazu eingerichtet sind, den Teil der internen Daten derart auszuwählen, dass zusätzlich ein Größenwert für den ausgewählten Teil der internen Daten erfüllt wird, wobei die jeweiligen Größenwerte für alle ausgewählten Teile der internen Daten, welche von den Knoten übertragen werden, bestimmt werden, zum:

- Minimieren einer globale Kostenfunktion, welche jeweilige Kostenfunktionen der Knoten (i, j) kombiniert, wobei die Kostenfunktion für jeden Knoten eine zunehmende Funktion der Abweichung zwischen der ersten und der zweiten synthetisierten digitalen Repräsentation für diesen Knoten ist; und
- gleichzeitiges Sicherstellen, dass eine Summe der jeweiligen Kommunikationsressourcenwerte, welche zum Übertragen des ausgewählten Teils der internen Daten verwendet werden, welche den gegeben Größenwerten zugeordnet sind, berechnet über alle Knoten (i, j), kleiner ist als eine maximale Kommunikationsressourcenkapazität, welche von der Mehrzahl von Knoten geteilt wird.

9. Verfahren nach Anspruch 8, wobei für jeden Knoten (i, j) der Kommunikationsressourcenwert als eine Funktion des Größenwerts des ausgewählten Teils der internen Daten, welcher durch den Knoten an die anderen Knoten gesendet werden soll, und eines Kommunikationsverbindungs-Qualitätsparameters bestimmt wird, wie beispielsweise einer Kanalantwort oder eines Signal-Rausch-Verhältniswerts, welcher wirksam für die drahtlosen Kommunikationsmittel (4) des Knotens ist.

10. Verfahren nach den Ansprüchen 4 und 9, wobei das Steuermodul (5) jedes Knotens (i, j) die folgenden Aktionen während wenigstens einiger der wiederholten Ausführungen der Schrittfolge aktiviert:

- die Rechenmittel (3) berechnen mehrere Werte der Kostenfunktion für den Knoten (i, j), wobei die Kostenfunktionswerte für mehrere mögliche Größenwerte des ausgewählten Teils der internen Daten geprüft werden;
- der Knoten (i, j) sendet an die anderen Knoten, unter Verwendung der drahtlosen Kommunikationsmittel (4), eine eigene Ressourcennachfrage, welche die Werte der Kostenfunktion und zugehörige Werte der Kommunikationsressourcen enthält,
und der Knoten sammelt entsprechende Ressourcennachfragen von den anderen Knoten; und
- die Rechenmittel (3) des Knotens (i, j) bestimmen einen Größenwert, welcher für den ausgewählten Teil der internen Daten verwendet werden soll, als einen Kompromiss zwischen den Kostenfunktionswerten und den zugehörigen Kommunikationsressourcenwerten aller Knoten.

11. Verfahren nach einem der Ansprüche 5 bis 10, wobei die Sensormittel (1) wenigstens eines der Knoten (i, j) eine LiDAR-Einheit umfassen.

12. Verfahren nach einem der vorhergehenden Ansprüche, wobei die Rechenmittel (3) jedes Knotens (i, j), welcher als Datensammelknoten betrieben wird, dazu eingerichtet sind, ein Gaußsches Mischmodell zu implementieren, um die internen Daten zu erzeugen, welche in Schritt /iii/ in den Speichermitteln (2) des Knotens gespeichert werden.

13. Verfahren nach einem der vorhergehenden Ansprüche, wobei wenigstens einer der Knoten (i, j) einen Träger (10) umfasst, vorzugsweise einen mobilen Träger, insbesondere einen Träger eines unbemannten Luftfahrzeugtyps, mit Komponenten des Knotens an Bord des Trägers.

14. Knoten (i, j), umfassend elektronische Speicher- und Rechenmittel (2, 3), drahtlose Kommunikationsmittel (4), welche geeignet zum Senden und Empfangen von Daten sind, und ein Steuermodul (5), wobei das Steuermodul eingerichtet ist, zum Steuern einer Ausführung eines Verfahrens nach einem der vorhergehenden Ansprüche, wenn der Knoten in Zusammenarbeit mit wenigstens einem anderen Knoten verwendet wird, welcher eingerichtet ist, zum Senden der externen Daten.

15. Knoten (i, j) nach Anspruch 15, ferner umfassend Sensormittel (1), welche geeignet sind, Messungen eines Umweltinhalts durchzuführen.

**Revendications**

1. Procédé de construction d'une connaissance d'un contenu d'environnement à l'aide d'une pluralité de nœuds (i, j), dans lequel au moins l'un des nœuds comprend des moyens électroniques de stockage et de calcul (2, 3), des moyens de communication sans fil (4) et un module de commande (5),

dans lequel les moyens de stockage (2) d'un des nœuds (i, j) fonctionnant en tant que nœud de collecte de données contiennent des données stockées qui forment une représentation numérique du contenu d'environnement, appelées données internes, et le procédé comprend la séquence d'étapes suivante exécutée au moins une fois par le nœud de collecte de données fonctionnant sous la commande du module de commande (5) dudit nœud de collecte de données :

/i/ la réception, par le biais des moyens de communication sans fil (4) dudit nœud de collecte de données et en provenance d'au moins un autre des nœuds, de données externes relatives au contenu d'environnement ;
/ii/ la sélection d'une partie des données internes stockées dans le nœud de collecte de données, et
/iii/ au sein du nœud de collecte de données, le stockage d'une fusion de la partie sélectionnée des données internes avec les données externes reçues à l'étape /i/,

dans lequel les moyens de calcul (3) du nœud de collecte de données sont configurés pour sélectionner la partie des données internes à l'étape /ii/ de manière à réduire au minimum un désaccord entre une première représentation numérique synthétisée qui résulte d'une fusion des données internes sans sélection avec les données externes reçues à l'étape /i/, et une deuxième représentation numérique synthétisée qui résulte d'une autre fusion de la partie sélectionnée desdites données internes avec lesdites données externes reçues à l'étape /i/,
produisant ainsi un compromis entre une réduction d'une quantité de données à stocker à l'étape /iii/ et un maintien d'un niveau de précision de la représentation numérique qui correspond à la fusion de données stockée à ladite étape /iii/.

2. Procédé selon la revendication 1, dans lequel la séquence d'étapes comprend en outre l'étape supplémentaire suivante :
/iv/ l'envoi par le nœud de collecte de données à au moins un autre des nœuds (i, j), à l'aide des moyens de communication sans fil (4), de la partie des données internes sélectionnée à l'étape /ii/ par ledit nœud de collecte de données.

3. Procédé selon la revendication 2, dans lequel la partie des données internes est sélectionnée à l'étape /ii/ par les moyens de calcul (3) du nœud de collecte de données sur la base de ressources de communication sans fil qui sont disponibles pour les nœuds (i, j).

4. Procédé selon l'une des revendications 1 à 3, dans lequel la séquence d'étapes est exécutée de manière répétée par le nœud de collecte de données.

5. Procédé selon l'une des revendications 1 à 4, dans lequel la pluralité de nœuds (i, j) présente une configuration centralisée dans laquelle chaque nœud autre que le nœud de collecte de données est un nœud de détection qui comprend au moins un moyen de détection (1) et des moyens de communication sans fil (4), et dans lequel les données externes reçues par le nœud de collecte de données à l'étape /i/ proviennent d'au moins une mesure effectuée par le moyen de détection (1) d'au moins un des nœuds de détection.

6. Procédé selon la revendication 5, dans lequel le nœud de collecte de données comprend un serveur.

7. Procédé selon l'une des revendications 1 à 4, dans lequel la pluralité de nœuds (i, j) présente une configuration distribuée dans laquelle plusieurs des nœuds sont des nœuds de détection et comprennent un moyen de détection respectif (1), des moyens électroniques de stockage et de calcul respectifs (2, 3), des moyens de communication sans fil respectifs (4) et un module de commande respectif (5), et

chaque nœud (i, j) est configuré pour fonctionner en tant que nœud de collecte de données respectif en exécutant la séquence d'étapes au moins une fois sous la commande du module de commande (5) dudit nœud, et
les données externes reçues par chaque nœud à l'étape /i/ proviennent d'au moins une mesure effectuée par le moyen de détection (1) d'au moins un autre des nœuds.

8. Procédé selon les revendications 2 et 7, dans lequel les moyens de calcul (3) de chaque nœud (i, j) sont configurés pour sélectionner la partie des données internes de manière à respecter en outre une valeur de taille pour ladite partie sélectionnée des données internes, les valeurs de taille respectives pour toutes les parties sélectionnées des données internes transmises par les nœuds étant déterminées pour :

- réduire au minimum une fonction coût globale combinant des fonctions coût respectives des nœuds (i, j), la fonction coût de chaque nœud étant une fonction croissante du désaccord entre les première et deuxième représentations numériques synthétisées pour ledit nœud, et
- garantir simultanément qu'une somme de valeurs de ressources de communication respectives qui sont utilisées pour transmettre la partie sélectionnée des données internes associées aux valeurs de taille données, calculée sur l'ensemble des nœuds (i, j), est inférieure à une capacité maximale de ressources de communication partagée par la pluralité de nœuds.

9. Procédé selon la revendication 8, dans lequel pour chaque nœud (i, j), la valeur de ressources de communication est déterminée en fonction de la valeur de taille de la partie sélectionnée des données internes à envoyer par ledit nœud aux autres nœuds et d'un paramètre de qualité de liaison de communication, tel qu'une réponse de canal ou une valeur de rapport signal/bruit effective pour les moyens de communication sans fil (4) dudit nœud.

10. Procédé selon les revendications 4 et 9, dans lequel le module de commande (5) de chaque nœud (i, j) active les actions suivantes pendant au moins certaines des exécutions répétées de la séquence d'étapes :

- les moyens de calcul (3) calculent plusieurs valeurs de la fonction coût pour ledit nœud (i, j), lesdites valeurs de fonction coût étant évaluées pour plusieurs valeurs de taille possibles de la partie sélectionnée des données internes ;
- le nœud (i, j) envoie aux autres nœuds, à l'aide des moyens de communication sans fil (4), une demande de ressources propre qui contient les valeurs de la fonction coût et les valeurs associées des ressources de communication, et ledit nœud collecte des demandes de ressources respectives des autres nœuds ; et
- le moyen de calcul (3) du nœud (i, j) détermine une valeur de taille à utiliser pour la partie sélectionnée des données internes dudit nœud, en tant que compromis entre les valeurs de fonction coût et les valeurs de ressources de communication associées de tous les nœuds.

11. Procédé selon l'une des revendications 5 à 10, dans lequel le moyen de détection (1) d'au moins un des nœuds (i, j) comprend une unité LiDAR.

12. Procédé selon l'une des revendications précédentes, dans lequel les moyens de calcul (3) de chaque nœud (i, j) qui fonctionne en tant que nœud de collecte de données, sont configurés pour mettre en œuvre un modèle de mélange gaussien pour produire les données internes qui sont stockées à l'étape /iii/ dans les moyens de stockage (2) dudit nœud.

13. Procédé selon l'une des revendications précédentes, dans lequel au moins l'un des nœuds (i, j) comprend un porteur (10), de préférence un porteur mobile, en particulier un porteur de type véhicule aérien sans pilote, avec des composants du nœud à bord du porteur.

14. Nœud (i, j) comprenant des moyens électroniques de stockage et de calcul (2, 3), des moyens de communication sans fil (4) adaptés à la transmission et à la réception de données, et un module de commande (5), dans lequel le module de commande est configuré pour commander l'exécution d'un procédé selon l'une des revendications précédentes lorsque le nœud est utilisé en coopération avec au moins un autre nœud configuré pour envoyer les données externes.

15. Nœud (i, j) selon la revendication 15, comprenant en outre un moyen de détection (1) adapté à la réalisation de mesures sur un contenu d'environnement.

FIG. 1

**FIG. 2**

EP 4 654 628 B1

FIG. 3a

FIG. 3b

FIG. 3c

**FIG. 4**

EP 4 654 628 B1

FIG. 5

**EP 4 654 628 B1**

**Patent documents cited in the description**

- US 2020245115 A1